# EUROPEAN PATENT SPECIFICATION

(11) **EP 1 909 592 B1**
(45) Date of publication and mention of the grant of the patent: **18.03.2009**
(21) Application number: 06792596.6
(22) Date of filing: 28.07.2006
(51) Int. Cl.: A23J 1/10, A23J 1/00, A23J 1/12, A23J 1/14, A23J 1/20, A23L 1/304, A23J 3/32, A23J 3/34

(54) **PROCESS FOR THE PRODUCTION OF HYDROLYZED-PROTEIN BASED PRODUCTS IN COMPOSITION WITH MANGANESE**
VERFAHREN FÜR DIE PRODUKTION VON HYDROLISIERTEN PROTEIN-BASIERTEN PRODUKTEN IN VERBINDUNG MIT MANGAN
PROCEDE DE PRODUCTION DE PRODUITS A BASE DE PROTEINES HYDROLYSEES EN COMBINAISON AVEC DU MANGANESE

(30) Priority: 05.08.2005 IT RM20050425
(43) Date of publication of application: 16.04.2008
(73) Proprietor: Sicit Chemitech S.p.A., 36072 Chiampo (VI) (IT)
(72) Inventor: CANDIDO, Manuela Cinzia, I-36072 Chiampo Vi (IT); NERESINI, Massimo, I-36072 Chiampo Vi (IT); ODELLI, Oreste, I-36072 Chiampo Vi (IT); PIVA, Marco, I-36072 Chiampo Vi (IT)
(74) Representative: Germinario, Claudio
(86) International application number: PCT/EP2006/064769
(87) International publication number: WO 2007/017402

(56) References cited:
- EP-A- 1 021 958
- EP-A- 1 529 775
- WO-A-01/05707
- WO-A-02/09522
- GB-A- 2 113 199
- US-A- 4 483 829
- US-A- 5 698 724
- US-A1- 2004 038 391
- US-B1- 6 342 252
- US-B1- 6 352 714

## Description

The invention refers to a process for the production of protein hydrolysates in composition with manganese, in particular of the type obtainable from by-products of animal origin and/or from waste and/or from leather tanning industry residues obtained before and after the tanning step.

The same products may be obtained from by-products or products of plant origin, like, e.g., soy and gluten, which are characterised by having high protein content, and/or from agroindustrial waste or other by-products or products of animal origin, like, e.g., milk, dairy products, meat, etc.

Hereinafter, by the wording protein organic material" it will be meant one of the above-mentioned starting products or a mixture thereof. By "manganese" instead it is meant any form of this metal, as a pure salt or mixed salts.

Non-organic-based compounds and manganese carriers are used in several industrial fields, in agriculture and zootechnics. The association with an organic molecule having specific peculiarities makes manganese particularly active for industrial uses and characterised by bioavailability for use in the agricultural and zootechnical field.

Hence, the products deriving from the process subject-matter of this invention are useful where there is a need to have available innovative absorption technologies involving the use of manganese sources in forms not alien to plant or animal physiology, bioavailable in the absorption system and that may also avoid overdosage problems, like, e.g., toxicity.

These products are useful, e.g. in zootechnics, as manganese supplements that are usually added to diets in order to best perform the functions vital to animal organisms, providing a coverage for the requirements of the manganese element with a dosage lower than those commonly used, and avoiding overdosage in the animal diet, reducing any phenomena of interference with other elements.

Inorganic salts, used in food ration in order to contribute the required micronutrients, are added in remarkable amounts, not only because they are absorbed to a lesser extent as not being carried by a biologically active entity, but also because they can easily be made unavailable to absorption by some natural constituents of diets.

In general, mineral elements, when associated to natural organic structures, are recognised by plant and animal organisms as being part of their system and therefore readily used without any biochemical reprocessing to make the elements biocompatible.

The manganese dosages employed in case of use of said products deriving from the process subject-matter of this invention are remarkably reduced with respect to traditional manganese compounds, with the consequent lesser release and accumulation in the environment. Said products are useful also where there is a need to avail of manganese sources in innovative forms, not necessarily in a zootechnical or agricultural field.

E.g., dishwasher detergents, besides cleaning efficiently and avoiding limescale formation, should be easily removable and apt to avoid corrosion of decorations and silver. Old-fashioned detergents provided an alkaline environment and a hypochlorite-based whitening system unsuitable for silver. New-fashioned detergents provide instead a low alkalinity, an Oxygen-based whitening system in the presence of sodium bicarbonate and the use of corrosion-inhibiting substances like BHT (benzotriazole), sodium silicate and salts of metals active under the redox standpoint, like manganese. Therefore, the products deriving from the process subject-matter of this invention may advantageously be used in the composition of dishwasher detergents.

Laundry detergents also require catalysts for the action of removing stains from fabrics performed by perborate. These years, research is aimed at improving sodium perborate activity with various activators, such as TAED (Tetra Acetyl Ethylene Diamine), allowing low-temperature washing with an advantageous energy saving and the safeguarding of the fabrics treated. Experimental tests carried out have assessed that manganese-containing organic-based products are effective at eliminating tea, coffee and wine stains at low temperatures, likely owing to interactions between fabric and protein hydrolysate, making manganese ions more available to redox reactions.

Products are known in the state of the art made of mixtures of amino acids and peptides, or also of protein hydrolysates deriving, e.g., from material containing connective tissues deriving from hide processing in a tannery, obtained with hydrolysis processes envisaging the use of lime even at high temperatures and pressures. They are described, e.g., in the exemplary embodiment of Italian Pat. Appl. N°. 85511/A/82 and in European Pat. Appl. N° 99101295.6 (Patent N° EP-A-1021958).

US Patent 6,352,714 discloses a process resulting in a protein hydrolysate characterized by a low level of hydrolyzed products. In fact the molecular weight of the peptide fragments ranges between 5,000 and 100,000, but preferably 35,000 to 50,000 Dalton. US Patent 5,698,724 describes a process to produce metal amino acid complexes, not however protein hydrolysate comprising peptides of higher molecular weight.

However, it has not yet been contrived a process for obtaining protein hydrolysates in composition with manganese such as to obtain a product of adequate quality, ready for use in one of the abovementioned fields. Hence, the technical problem underlying the present invention is to provide such a process.

Such a problem is solved by a process for obtaining protein hydrolysates in composition with manganese employing, as starting material, a protein organic material as defined in the foregoing, which is subjected to a step of hydrolysis by action of bases and/or acids and/or enzymes, and providing the exchange reaction between the amino acids and peptides salified with calcium and manganese sulphate or other manganese salts at high temperatures, solubilised beforehand in sulphuric acid solutions.

Lastly, it is provided the precipitation of any residual calcium salified by the amino acids and peptides by action, e.g., of ammonium bicarbonate, sodium bicarbonate or directly with carbon dioxide and/or other precipitating agents, like, e.g., oxalic acid and phosphoric acid.

The process according to the invention is defined in the appended claim 1.

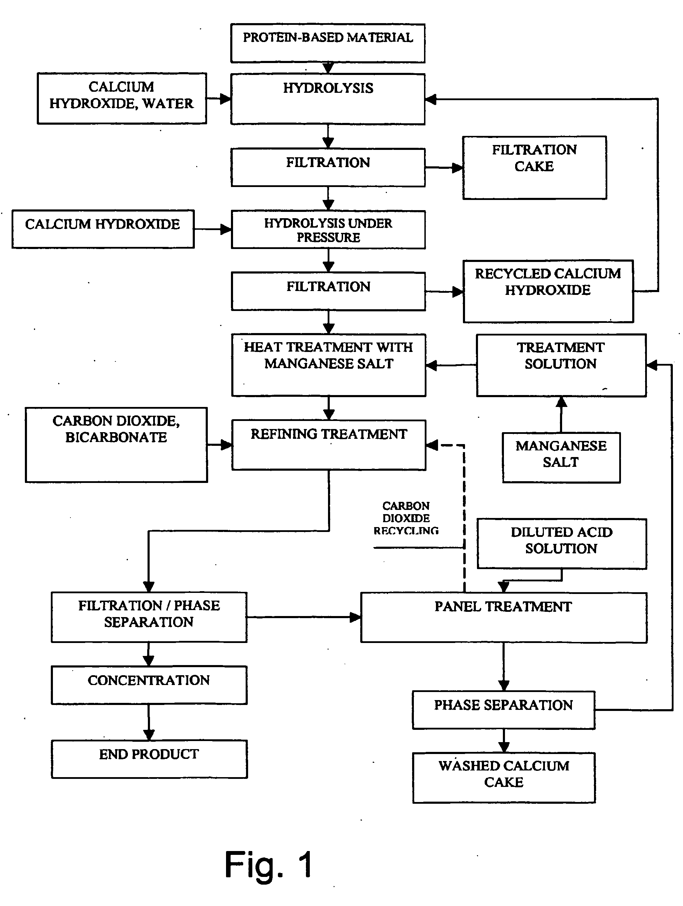

The annexed figure 1 shows a general diagram, by way of example and without limitative purposes, of the industrial process for obtaining the protein hydrolysate in composition with manganese.

With reference to the abovedefined process, it is carried out by a step of hydrolysis of protein based organic material.

The hydrolysis, as it will be illustrated in the following examples, may be carried out with bases, by treating the organic material e.g. with lime; with acid, by treating it e.g. with sulphuric acid, that along the process may advantageously be recycled; or enzymatically, by employ of a proteolytic enzyme.

Conveniently, there could be employed first an exoproteolytic enzyme, to cleave the peptide structures externally thereto, and then an endoproteolytic enzyme, to cleave the inside of said structures.

To the mixture of hydrolysis it is added calcium hydroxide, for example yet not exclusively in the form of lime or lime milk. According to a preferred embodiment, manganese sulphate is then added in order to carry out an exchange reaction between the amino acids and the peptides salified with calcium and manganese sulphate. The latter may have been solubilised beforehand in sulphuric acid solutions.

This step occurs at a temperature preferably higher than or equal to 90 °C. Preferably, the treatment with one or more manganese salts and/or manganese solubilised beforehand in acid solution occurs under conditions of: temperature> 120°C, pressure > 2.0 bar and time> 1 hour.

Lastly, it is provided the precipitation of any residual calcium (CaSO4) salified by the amino acids and the peptides, by action of a precipitating agent, like e.g. ammonium bicarbonate, sodium bicarbonate, oxalic acid or phosphoric acid, or carbon dioxide scrubbed in the solution.

The acid solution obtained after filtration may be added with manganese sulphate and used on another aliquot of medium to be subjected to treatment. Any carbon dioxide developed during the acid treatment step is used for the precipitation of residual calcium after the treatment with manganese sulphate solubilised by action of sulphuric acid.

The mixture of amino acids and peptides in composition with manganese, in order to be advantageously used in agricultural, zootechnical and industrial fields is characterised by an average molecular weight of <2000 Daltons and by a distribution of molecular weights of <10000 Daltons.

These analytical features are those making it particularly apt to give a greater activity to manganese. Associated to the low molecular weight and to the peculiar distribution of molecular weights of the mixture of amino acids and/or peptides there is an amount of free amino acids equal to at least 1% per each percent point of organic nitrogen.

The actual amount of manganese binding by salification, complexing or chelation with the amino acids and peptides depends on the reaction conditions between the amino acids, the peptides salified with calcium and the manganese salt added in acid solution (temperature, pressure, reaction times, pH, salt addition modes).

The products obtained according to the processes described in this patent application may optionally be dried and/or added with acids or bases or other salts in order to assure greater stability over time and to thermal shocks.

The result of the abovedescribed process may then be subjected to filtration and concentration.

The starting protein organic material may optionally be integrated with amino acids or peptides of synthetic or fermentative origin and/or with other organic and inorganic manganese compounds.

The product thus obtained is useful in the zootechnical field as manganese supplement, as nutrient, fungicide and bactericide, as additive in the formulation of detergents or as catalyst.

The FT-IR (Fourier Transform Infrared Spectrophotometry) technique is used for composition investigations, as any covalent bond is characterised by specific vibration sequences depending on the bond strength, therefore on its energy and on the mass of the atoms involved, and is influenced by the variations of the chemical neighbourhood. Hence, by this technique it is highlighted the presence of functional groups, obtaining information on the chemical bonds and the molecular structure.

The obtained vibrational spectra offer some information about the variations of the chemical neighbourhood of the hydrolysed protein product determined by the presence of manganese, and therefore the peculiarity of these products.

Due to the complexity characterizing mixtures of amino acids and peptides, specific secondary features cannot be highlighted; yet, by this technique there can be highlighted the spectral variations corresponding to the coordination of amino acids and peptides with elements. The obtained FT-IR spectra confirm the presence of coordination bonds, thereby confirming the presence of compounds justifying the peculiarity of their action.

### Preparation examples

### Example 1 (Basic hydrolysis)

To 400 g industrial waste consisting of shaving and trimmings, 28 g lime and 2 1 water are added; then, the mass is brought to a temperature of 90°C, the material is left at said temperature for 6 hours and filtered, yielding 360 g cake and 21 medium.

The hydrolysed protein solution thus obtained (21) is added with 40 g lime and subjected to heat treatment, so as to assure the conditions: temperature =140°C, pressure = 3.6 bars; time > 30 min, finally obtaining a solution with 90g/l dry matter and 89 g/l calcium content.

A sample is collected to analyze molecular weight distribution, and it is checked the agreement of the analytical parameters that have been identified as optimal for obtaining these products; i.e. average molecular weight of <2000 Daltons with the entailed high content of free amino acids.

After filtration, the solution is added with a solution containing 769 g technical grade manganese sulphate with 31.8% manganese dissolved in an acid solution containing 80 g 50% sulphuric acid and 150 g water The solution is subjected to the treatment underpressure at high temperatures (T > 140°C, p > 3.6 bar absolute) for a 30-min time. 72 g calcium sulphate with 81.5% dry matter is separated from the solution and the residual calcium is eliminated by carbon dioxide scrubbing, at the temperature of 80°C and for a 400-min time.

After filtration and concentration, there are obtained 488 g of product with a 4.1% w/w organic nitrogen, 4.7% w/w manganese and 45% w/w dry matter content.

The calcium sulphate cake obtained after the heat treatment with the acid solution of manganese sulphate is suspended with 137 g water and 78 g sulphuric acid 50% and brought to the temperature of 80 °C. The solution is filtered, and the solution containing the residual manganese (1.5% with respect to the manganese introduced) is added with 75.8 g manganese sulphate and used for the subsequent test, that envisaged the obtaining of another aliquot of sample.

In figure 1 it is reported by way of example a process diagram indicating the operative conditions for obtaining the abovedescribed manganese-based product.

### Example 2 (Acid hydrolysis)

To 2000 g ground fleshings (by-product of animal origin from category 3 hides, according to the Regulation EC 1774/2002 currently in force) there are added 280 g sulphuric acid 50% in order to attain pH < 2; the mass is brought to the temperature of 90 °C and left at said temperature for 5 hours. Surfaced fat (190 g) is separated from the mass.

The obtained acid suspension is added with 400 g lime milk (containing 28% lime) to attain a pH value > 11. The obtained mass is added with 250 g lime milk and subjected to a heat treatment providing continual presence under conditions: temperature > 140°C, pressure > 3.6 bar abs, time > 30 min.

The resulting suspension is filtered, obtaining 510 g cake with 55% dry matter containing calcium sulphate and 2.1 1 medium with 65 g/l dry matter and calcium content equal to 9g/l.

A sample is collected to analyze molecular weight distribution, and it is checked the agreement of the analytical parameters that have been identified as optimal for obtaining these products, i.e. average molecular weight of <2000 Daltons.

Then, after filtration the solution is added with a solution containing 81.6 g technical grade manganese sulfate with 31.8% manganese dissolved in an acid solution containing 85.7 g sulphuric acid 50% and 160 g water.

The process provides this solution to be due to the recovering and washing of the cake obtained in a subsequent step of the process.

The solution is subjected to the treatment under pressure at high temperatures (T > 140°C, p > 3.6 bar abs.) for a 30-min time. Calcium sulphate is separated from the solution by filtration, and it is obtained a solution containing 9.5 g/l manganese and 0.55 g/l calcium. Calcium is eliminated by treatment with oxalic acid in stoichiometric amount (1.25 g) at 80°C for 20 min. The cake obtained in this step is treated with sulphuric acid solutions in order to redissolve the residual and filtered manganese.

The solution obtained is of course reunited to the acid solution obtained in the washing with water and sulphuric acid of the cake obtained after heat treatment with acid manganese sulphate solution and suitably added with sulphuric acid and manganese sulphate for the subsequent preparation of another aliquot of sample. The obtained calcium oxalate cake is discarded.

After filtration and concentration, there are obtained 366 g of a product with a 50% dry matter, 3.3% w/w organic nitrogen, 6.3% w/w manganese content.

### Example 3 (Enzymatic hydrolysis)

To 400 g industrial waste consisting of shaving and trimmings containing connective material, 2 1 water are added; the mass is brought to pH = 8 by addition of lime and to the temperature of 55 °C, then 2 g Alcalase® are added, the material is left at said temperature for 24 h and filtered obtaining 360 g cake and 2 1 medium.

The protein solution thus obtained (2 1) is added with 40 g lime and subjected to heat treatment so as to ensure the conditions: temperature = 140°C, pressure = 3.6 bar, time > 30 min, finally obtaining a solution with 90 g/l dry matter and 11 g/l calcium content.

A sample is collected to analyze molecular weight distribution, and it is checked the agreement of the analytical parameters that have been identified as optimal for obtaining these products; i.e. average molecular weight of <2000 Daltons.

Then, after filtration, the solution is added with a solution containing 95.0 g technical grade manganese sulphate with 31.8% manganese dissolved in an acid solution containing 110 g sulphuric acid 50% and 160 g water. The solution is subjected to the treatment under pressure at high temperatures (T> 140°C, p > 3.6 bar abs.) for a 30-min time. Calcium sulphate is separated from the solution, and the residual calcium is eliminated by addition of ammonium sulphate at the temperature of 74°C and for a 10-min time.

After the filtration, the calcium carbonate cake is treated with a solution of sulphuric acid 20% and the carbon dioxide developed is used in the step of abating the residual calcium.

After concentration of the filtered solution, there are obtained 555 g of a product with a 3.8% w/w organic nitrogen, 4.8% w/w manganese and 47% w/w dry matter content.

### Example 4

To 2240 g ground fleshings (Category 3 by-product of animal origin material) there are added 240 g water and 460 g sulphuric acid 40%; the mass is brought to the temperature of 90 °C and left at said temperature for 5 hours. Surfaced fat (245 g) is taken out by suction.

Then, to the protein medium 448 g sulphuric acid 50% are added, so as to attain pH < 1. The obtained mass is subjected to a heat treatment providing continual presence under conditions: temperature = 120°C, pressure = 2.0 bar abs., for a time = 8 hours.

To the hydrolysed solution thus obtained there are repeatedly added 310 g lime milk at the temperature of 80°C allowing to attain pH > 11.

The resulting solution is filtered, obtaining 958 g cake with 62.9% dry matter containing calcium sulphate and 2397 1 medium with 66 g/l dry matter and a calcium content equal to 72 g/l. A sample is collected to analyze molecular weight distribution, and it is checked the agreement of the analytical parameters that have been identified as optimal for obtaining these products, i.e. average molecular weight of <2.000Daltons.

Then, after filtration the solution is added with a solution containing 74.6 g technical grade manganese sulphate with 31.8% manganese dissolved in an acid solution containing 83 g sulphuric acid 50% and 150 g water. The solution is subjected to heat treatment at 100°C under room pressure for one hour. Calcium sulphate is separated from the solution, and it is obtained a solution containing 8.6 g/l manganese and 0.9 g/l calcium. Calcium is eliminated by carbon dioxide treatment at 74°C for 40 min, adjusting pH to the value of 7.5 with sodium hydroxide.

After filtration and concentration there are obtained 491 g of a product with a 42% w/w dry matter, 3.1% w/w organic nitrogen, 4.5% w/w manganese content.

The products obtained according to this process essentially consist of amino acids and peptides salified and/or complexed and/or chelated with manganese and generally definable as containing an effective amount of manganese, which may find application in various fields.

The element manganese, when associated to natural organic structures, is recognised by plant and animal organisms as being part of their system and therefore readily useful without any biochemical reprocessing to make the manganese biocompatible. In general, the organic structures associated to manganese exhibit an action that may be described as of mere carrier or are capable of activating specific processes with a remarkable metabolic saving.

The products described in this patent application, by containing manganese, may advantageously be used as manganese supplements in zootechnics, where complexes characterised by an improved biological effectiveness are required. In fact, it is known in literature that with oligoelements linked to natural organic compounds an easier absorption is attained; therefore, their contribution through food and their excreted amount can be reduced, optimizing the dosages.

The manganese element, known not merely as a biological catalyst but also as an industrial one, when associated to organic structures such as amino acids and peptides originates peculiar structures capable of performing a catalyzing action for whitening agents in laundry detergents and, e.g., a protective function in dishwasher detergents, inhibiting corrosion of metal surfaces.

The manganese element, present in several industrial applications as catalyst, activator, reducing and co-formulating agent, may advantageously be used by exploiting the availability of this element in the peculiar form thereof characterising the products of the present invention. In particular, they can in fact be used as co-formulants of paints, varnishes, vitreous enamels, vitreous varnishes, dyes for the printing, colouring, treating and processing of ceramics, glass, metal surfaces, wood, fabrics and surfaces of building materials and artefacts.

To the above-described process a person skilled in the art, in order to satisfy further and contingent needs, may effect several further modifications and variants, all however falling within the protective scope of the present invention, as defined by the annexed claims.

## Claims

1. A process for obtaining protein hydrolysates in composition with manganese and/or manganese salts, comprising the steps of:
hydrolyzing a protein organic material, as starting material, by action of bases and/or acids and/or enzymes;
adding calcium hydroxide to the hydrolyzed protein solution;
adding one or more manganese salts and/or manganese solubilized beforehand in an acid solution, to promote the exchange reaction between the amino acids- and peptides-calcium salts and the manganese salts at a temperature higher than or equal to 90°C; and
eliminating excess calcium with a precipitating agent,
wherein the obtained protein hydrolysate is a mixture of amino acids and peptides having an average molecular weight of <2000 Daltons and a content of free amino acids in an amount of >1% per each percent point of organic nitrogen.

2. The process according to claim 1, wherein said protein organic material comprises by-products of animal origin and/or from waste and/or from leather tanning industry residues obtained before and after the tanning step, by-products or products of plant origin with a high protein content, agroindustrial waste, by-products or products of animal origin.

3. The process according to claim 2, wherein said protein organic material comprises leather tanning industry residues, obtained before and after the tanning step.

4. The process according to claim 2, wherein said protein organic material comprises soy and/or gluten.

5. The process according to claim 2, wherein said protein organic material comprises milk, milk derivatives, meat.

6. The process according to any one of the preceding claims, wherein the basic hydrolysis is carried out by addition of lime.

7. The process according to any one of the preceding claims, wherein the acid hydrolysis is carried out by addition of sulphuric acid, the manganese being then provided by manganese sulphate.

8. The process according to any one of the preceding claims, wherein the enzymatic hydrolysis is carried out by employing a proteolytic enzyme.

9. The process according to claim 8, wherein it is employed, in sequence, an exoproteolytic enzyme and an endoproteolytic enzyme.

10. The process according to claim 7, wherein a cake made of insoluble calcium salts and a manganese-containing protein solution is treated boiling with diluted sulphuric acid, in order to selectively wash the separated cake, obtaining an acid solution that, after filtration, is added with manganese sulphate and used on another aliquot of protein solution to be subjected to a new treatment.

11. The process according to claim 7, wherein carbon dioxide developed during the step of acid treatment is used for the precipitation of residual calcium after the treatment with manganese sulphate solubilised by action of sulphuric acid.

12. The process according to claim 1, wherein the precipitating agent is selected from the group consisting of ammonium bicarbonate, sodium bicarbonate, oxalic acid, phosphoric acid, and carbon dioxide scrubbed in the solution.

13. The process according to claim 1, wherein the treatment with one or more manganese salts and/or manganese solubilised beforehand in an acid solution occurs under conditions of > 120°C temperature, pressure > 2.0 bar and time > 1 hour.

14. The process according to any one of the preceding claims, wherein the resulting product is subjected to filtration and concentration.

15. The process according to any one of the preceding claims, wherein the organic material is added with amino acids or peptides of synthetic or fermentative origin.

16. The process according to any one of the preceding claims, wherein the organic material is added with other organic and inorganic manganese compounds.

17. Use of protein hydrolysate products in composition with manganese obtained in accordance to the process of any one of the preceding claims in the zootechnical field as manganese supplement.

18. The use of protein hydrolysate products in composition with manganese obtained in accordance to the process of any one of the claims 1 to 16 as nutrient, fungicide and bactericide.

19. The use of protein hydrolysate products in composition with manganese obtained in accordance to the process of any one of the claims 1 to 16 as additive in the formulation of detergents.

20. The use of protein hydrolysate products in composition with manganese obtained in accordance to the process of any one of the claims 1 to 16 as catalyst, activator, or reducing agent.

21. The use of protein hydrolysate products in composition with manganese obtained in accordance to the process of any one of the claims 1 to 16 as co-formulant of paints, varnishes, vitreous enamels, vitreous varnishes, dyes for the printing, colouring, treating and processing of ceramics, glass, metal surfaces, wood, fabrics and surfaces of building materials and artefacts.

## Patentansprüche

1. Verfahren zur Gewinnung von Proteinhydrolysaten in Zusammensetzung mit Mangan und/oder Mangansalzen, umfassend die Schritte:
Hydrolysieren eines Protein enthaltenden organischen Materials, als Ausgangsmaterial, durch Einwirken von Basen und/oder Säuren und/oder Enzymen;
Hinzufügen von Calciumhydroxid zu der hydrolysierten Proteinlösung;
Hinzugeben eines oder mehrerer Mangansalze und/oder von Mangan, welches zuvor in einer Säurelösung gelöst wurde, um die Austauschreaktion zwischen den Calciumsalzen der Aminosäuren und Peptide und den Mangansalzen bei einer Temperatur gleich oder höher 90°C zu fördern; und
Entfernen überschüssigen Calciums mit einem Fällungsmittel,
wobei das erhaltene Proteinhydrolysat ein Gemisch von Aminosäuren und Peptiden mit einem mittleren Molekulargewicht von <2000 Dalton und einem Gehalt an freien Aminosäuren in einer Menge von >1% pro jedem Prozentpunkt organischen Stickstoffs ist.

2. Verfahren gemäß Anspruch 1, wobei das Protein enthaltende organische Material Nebenprodukte tierischen Ursprungs und/oder von Abfall und/oder von vor und nach dem Gerbeschritt erhaltenen Resten aus der Ledergerbindustrie, Nebenprodukte oder Produkte pflanzlichen Ursprungs mit einem hohen Proteingehalt, Abfall aus der Agrarindustrie und Nebenprodukte oder Produkte tierischen Ursprungs umfasst.

3. Verfahren gemäß Anspruch 2, wobei das Protein enthaltende organische Material vor und nach dem Gerbschritt erhaltene Reste aus der Ledergerbindustrie umfasst.

4. Verfahren gemäß Anspruch 2, wobei das Protein enthaltende organische Material Soja und/oder Gluten umfasst.

5. Verfahren gemäß Anspruch 2, wobei das Protein enthaltende organische Material Milch, Milchderivate und Fleisch umfasst.

6. Verfahren gemäß einem der vorangehenden Ansprüche, wobei die basische Hydrolyse durch Zugabe von Kalk durchgeführt wird.

7. Verfahren gemäß einem der vorangehenden Ansprüche, wobei die saure Hydrolyse durch Zugabe von Schwefelsäure durchgeführt wird, wobei das Mangan dann durch Mangansulfat bereitgestellt wird.

8. Verfahren gemäß einem der vorangehenden Ansprüche, wobei die enzymatische Hydrolyse durch Einsatz eines proteolytischen Enzyms durchgeführt wird.

9. Verfahren gemäß Anspruch 8, wobei der Reihe nach ein exoproteolytisches Enzym und ein endoproteolytisches Enzym eingesetzt werden.

10. Verfahren gemäß Anspruch 7, wobei ein Filterkuchen, hergestellt aus unlöslichen Calciumsalzen und einer Mangan enthaltenden Proteinlösung, durch Kochen mit verdünnter Schwefelsäure behandelt wird, um den abgetrennten Filterkuchen selektiv zu waschen, wobei eine Säurelösung erhalten wird, welche nach Filtration mit Mangansulfat versetzt und für ein weiteres Aliquot der Proteinlösung, welches einer neuen Behandlung unterzogen werden soll, verwendet wird.

11. Verfahren gemäß Anspruch 7, wobei Kohlendioxid, welches sich während des Säurebehandlungsschrittes entwickelt, zur Fällung von nach der Behandlung mit Mangansulfat, welches durch Einwirken von Schwefelsäure gelöst wurde, zurückbleibendem Calcium verwendet wird.

12. Verfahren gemäß Anspruch 1, wobei das Fällungsmittel ausgewählt ist aus Ammoniumhydrogencarbonat, Natriumhydrogencarbonat, Oxalsäure, Phosphorsäure und Kohlendioxid, das in die Lösung ausgewaschen wurde.

13. Verfahren gemäß Anspruch 1, wobei die Behandlung mit einem oder mehreren Mangansalzen und/oder in einer Säurelösung zuvor gelöstem Mangan unter Bedingungen von >120°C Temperatur, Druck > 2,0 bar und Zeit > 1 Stunde stattfindet.

14. Verfahren gemäß einem der vorangehenden Ansprüche, wobei das Ergebnis des Verfahrens einer Filtration und Konzentration unterzogen wird.

15. Verfahren gemäß einem der vorangehenden Ansprüche, wobei das organische Material mit Aminosäuren oder Peptiden synthetischen oder fermentativen Ursprungs versetzt wird.

16. Verfahren gemäß einem der vorangehenden Ansprüche, wobei das organische Material mit anderen organischen und anorganischen Manganverbindungen versetzt wird.

17. Verwendung von Proteinhydrolysatprodukten in Zusammensetzung mit Mangan, erhalten gemäß dem Verfahren eines der vorangehenden Ansprüche, als Manganergänzungsmittel im Bereich der Tierzucht.

18. Verwendung von Proteinhydrolysatprodukten in Zusammensetzung mit Mangan, erhalten gemäß dem Verfahren eines der Ansprüche 1 bis 16, als Nährstoff, Fungizid und Bakterizid.

19. Verwendung von Proteinhydrolysatprodukten in Zusammensetzung mit Mangan, erhalten gemäß dem Verfahren eines der Ansprüche 1 bis 16, als Zusatz bei der Formulierung von Reinigungsmitteln.

20. Verwendung von Proteinhydrolysatprodukten in Zusammensetzung mit Mangan, erhalten gemäß dem Verfahren eines der Ansprüche 1 bis 16, als Katalysator, Aktivator oder Reduktionsmittel.

21. Verwendung von Proteinhydrolysatprodukten in Zusammensetzung mit Mangan, erhalten gemäß dem Verfahren eines der Ansprüche 1 bis 16, als Coformulierungsbestandteil von Farben, Firnissen, Emaille, glasartigen Firnissen, Farbstoffen für das Drucken, Färben, Behandeln und Verarbeiten von Keramik, Glas, Metalloberflächen, Holz, Textilwaren und Oberflächen von Baumaterial und Gegenständen.

## Revendications

1. Procédé pour obtenir des hydrolysats de protéines en mélange avec du manganèse et/ou des sels de manganèse comprenant les étapes de :
hydrolyser une matière organique protéinique, comme matière de départ, par l'action de bases et/ou d'acides et/ou d'enzymes ;
ajouter de l'hydroxyde de calcium à la solution de protéines hydrolysées ;
ajouter un ou plusieurs sels de manganèse et/ou du manganèse solubilisés au préalable dans une solution acide, pour favoriser la réaction d'échange entre les sels de calcium d'aminoacides et de peptides et les sels de manganèse à une température supérieure ou égale à 90°C ; et
éliminer le calcium en excès avec un agent précipitant,
où l'hydrolysat de protéines obtenu est un mélange d'aminoacides et de peptides ayant une masse moléculaire moyenne < 2000 daltons et une teneur en aminoacides libres en une quantité > 1 % pour chaque point de pourcentage d'azote organique.

2. Procédé selon la revendication 1 où ladite matière organique protéinique comprend des sous-produits d'origine animale et/ou issus de déchets et/ou issus de résidus de l'industrie du tannage du cuir obtenus avant et après l'étape de tannage, des sous-produits ou des produits d'origine végétale à haute teneur en protéines, des déchets agro-industriels, des sous-produits ou des produits d'origine animale.

3. Procédé selon la revendication 2 où ladite matière organique protéinique comprend des résidus de l'industrie du tannage du cuir, obtenus avant et après l'étape de tannage.

4. Procédé selon la revendication 2 où ladite matière organique protéinique comprend du soja et/ou du gluten.

5. Procédé selon la revendication 2 où ladite matière organique protéinique comprend du lait, des dérivés du lait, de la viande.

6. Procédé selon l'une quelconque des revendications précédentes où l'hydrolyse basique est conduite par addition de chaux.

7. Procédé selon l'une quelconque des revendications précédentes où l'hydrolyse acide est conduite par addition d'acide sulfurique, le manganèse étant alors apporté par le sulfate de manganèse.

8. Procédé selon l'une quelconque des revendications précédentes où l'hydrolyse enzymatique est conduite par l'emploi d'une enzyme protéolytique.

9. Procédé selon la revendication 8 où une enzyme exoprotéolytique et une enzyme endoprotéolytique sont employées successivement.

10. Procédé selon la revendication 7 où un gâteau comprenant des sels de calcium insolubles et une solution de protéines contenant du manganèse est traité à ébullition avec de l'acide sulfurique dilué, pour laver sélectivement le gâteau séparé, obtenir une solution acide qui, après filtration, est additionnée de sulfate de manganèse et utilisée sur une autre portion aliquote de solution de protéines destinée à être soumise à un nouveau traitement.

11. Procédé selon la revendication 7 où le dioxyde de carbone formé pendant l'étape de traitement acide est utilisé pour la précipitation du calcium résiduel après le traitement avec le sulfate de manganèse solubilisé par l'action d'acide sulfurique.

12. Procédé selon la revendication 1 où l'agent précipitant est choisi dans le groupe consistant en le bicarbonate d'ammonium, le bicarbonate de sodium, l'acide oxalique, l'acide phosphorique, et le dioxyde de carbone entraîné dans la solution.

13. Procédé selon la revendication 1 où le traitement avec un ou plusieurs sels de manganèse et/ou le manganèse solubilisés au préalable dans une solution acide a lieu dans des conditions d'une température > 120°C, d'une pression > 2,0 bar et d'une durée > 1 heure.

14. Procédé selon l'une quelconque des revendications précédentes où le produit résultant est soumis à une filtration et une concentration.

15. Procédé selon l'une quelconque des revendications précédentes où la matière organique est additionnée d'aminoacides ou de peptides d'origine synthétique ou issus de fermentation.

16. Procédé selon l'une quelconque des revendications précédentes où la matière organique est additionnée d'autres composés organiques et inorganiques du manganèse.

17. Utilisation de produits de type hydrolysats de protéines en mélange avec du manganèse obtenus selon le procédé selon l'une quelconque des revendications précédentes dans le domaine zootechnique comme complément de manganèse.

18. Utilisation de produits de type hydrolysats de protéines en mélange avec du manganèse obtenus selon le procédé selon l'une quelconque des revendications 1 à 16 comme nutriment, fongicide et bactéricide.

19. Utilisation de produits de type hydrolysats de protéines en mélange avec du manganèse obtenus selon le procédé selon l'une quelconque des revendications 1 à 16 comme additif dans la formulation de détergents.

20. Utilisation de produits de type hydrolysats de protéines en mélange avec du manganèse obtenus selon le procédé selon l'une quelconque des revendications 1 à 16 comme catalyseur, activateur, ou agent réducteur.

21. Utilisation de produits de type hydrolysats de protéines en mélange avec du manganèse obtenus selon le procédé selon l'une quelconque des revendications 1 à 16 comme co-composant de formulation de peintures, vernis, émaux vitreux, vernis vitreux, colorants pour l'impression, la coloration, le traitement et la transformation de céramiques, du verre, de surfaces métalliques, du bois, de tissus et de surfaces de matériaux de construction et de produits oeuvrés.
